(19) **Europäisches Patentamt**

**European Patent Office**

**Office européen des brevets**

(11) **EP 0 996 121 B1**

(12) **EUROPEAN PATENT SPECIFICATION**

(45) Date of publication and mention
of the grant of the patent:
**26.01.2005 Bulletin 2005/04**

(51) Int Cl.⁷: **G11B 7/135**, G02B 3/08,
G02B 3/10

(21) Application number: **99308341.9**

(22) Date of filing: **22.10.1999**

(54) **Optical recording and pickup head for digital versatile disc**

Optischer Aufzeichnungs/Abtastkopf für digital versatile disc (DVD)

Tête d'enregistrement et lecture d'un disque numérique polyvalent (DVD)

(84) Designated Contracting States:
**DE FR GB NL**

(30) Priority: **23.10.1998 KR 9844620**
**26.10.1998 KR 9844858**

(43) Date of publication of application:
**26.04.2000 Bulletin 2000/17**

(73) Proprietor: **SAMSUNG ELECTRONICS CO., LTD.**
**Suwon-City, Kyungki-do (KR)**

(72) Inventors:
• **Yoo, Jang-Hoon**
**Youngdungpo-gu, Seoul (KR)**
• **Lee, Chul-Woo**
**Pundang-gu, Sungnam-city, Kyungki-do (KR)**
• **Cho, Kun-Ho**
**Paldal-gu, Suwon-city, Kyunkgi-do (KR)**
• **Seong, Pyong-Yong**
**Karak-dong, Songpa-gu, Seoul (KR)**

(74) Representative: **Robinson, Ian Michael et al**
**Appleyard Lees,**
**15 Clare Road**
**Halifax HX1 2HY (GB)**

(56) References cited:
**EP-A- 0 747 893** **EP-A- 0 831 469**
**EP-A- 0 859 356** **EP-A- 0 932 145**
**EP-A- 0 936 604** **WO-A-98/13826**
**WO-A-98/19303** **US-A- 5 809 000**
**US-A- 5 838 496**

EP 0 996 121 B1

**Description**

The present invention relates to an optical recording and pickup head for use with at least two different format optical discs in which recording and reproduction of information is performed by light of a respectively different wavelength, and more particular, to an optical recording and pickup head for recording information on a digital versatile disc (DVD) or a read-writable compact disc (CD-RW) and reproducing information therefrom.

Optical discs are widely used as recording media for storing a large capacity of information. Formats include CDs and DVDs which are widely used, and more recently a recordable CD (CD-R) and a CD-RW have been introduced. For DVDs, recording and reproduction of information is performed by laser light having a wavelength of 660nm. For CD-RWs, recording and reproducing of information is performed by laser light having a wavelength of 790nm. Accordingly, an optical recording and pickup head which is compatible with both a DVD and a CD-RW includes two optical sources for emitting laser light of a respectively different wavelength, and an optical system for the two kinds of light.

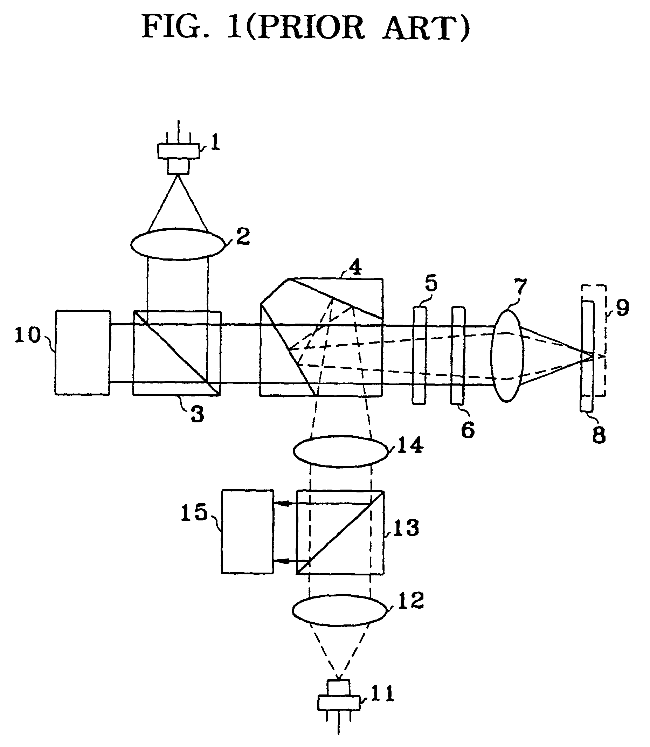

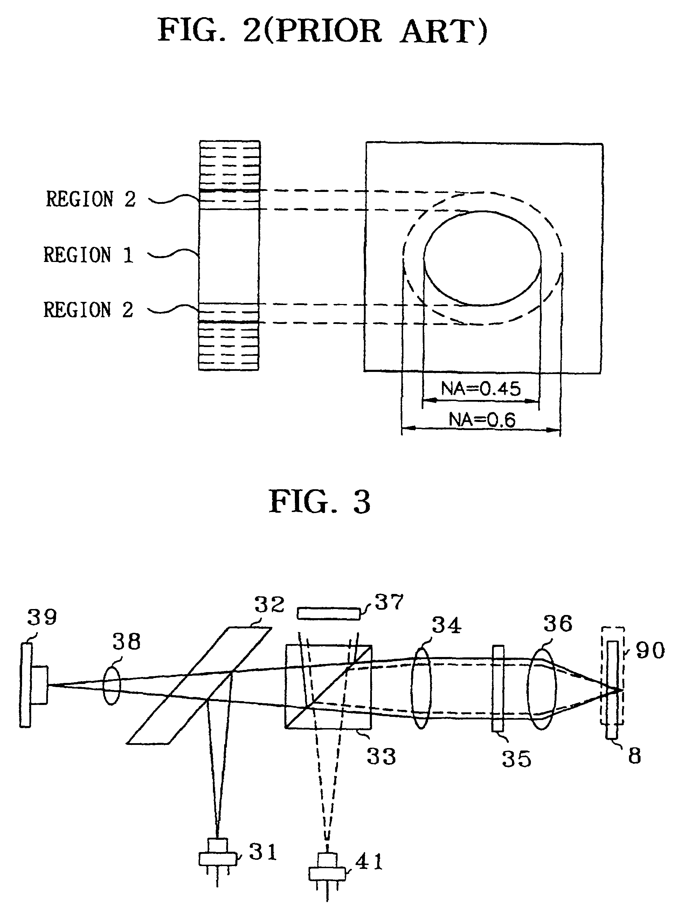

Referring to Figures 1 and 2, a conventional optical recording and pickup head which is compatible with both a DVD and a CD-R will be described below.

Figure 1 shows a configuration of a conventional optical recording and pickup head which is compatible with both a DVD and a CD-R. Examples of conventional optical recording and pickup heads are disclosed in EP-A-0831469, EP-A-0747893, EP-A-0932145, WO 98/13826, EP-A-0936604 and WO 98/19303. The optical recording and pickup head includes an optical source 1 that emits first light of 660nm in order to perform recording and reproduction of information with respect to a DVD 8, an optical source 11 that emits second light of 790nm in order to perform recording and reproduction of information with respect to a CD-R 9, and an objective lens 7 for focusing the first and second light emitted from the optical sources 1 and 11 on information recording surfaces of the DVD 8 and CD-R 9, respectively. A collimating lens 2 collimates the first light emitted from the optical source 1 into parallel light and transfers the collimated light to a beam splitter 3. The beam splitter 3 reflects the first light incident from the collimating lens 2 onto an interference filter prism 4. The interference filter prism 4 transfers the first light which is the parallel light incident from the beam splitter 3 to a quarter-wave plate 5. In more detail the interference filter prism 4 is an optical device for total transmitting and total reflecting incident light according to its wavelength, in which the first light of 660nm is totally transmitted and the second light of 790nm incident from a converging lens 4 is totally reflected. A thin-film type variable aperture 6 transfers the first light incident from the quarter-wave plate 5 to the objective lens 7. The objective lens 7 focuses the parallel incident first light on the information recording surface of the DVD 8 whose thickness is 0.6mm. As a result, the first light which is focused on and reflected from the information recording surface of the DVD 8 contains the information recorded on the focused position. The first light reflected from the information recording surface of the DVD 8 transmits the objective lens 7, the variable aperture 6 and the quarter-wave plate 5, in turn and then incident to the interference filter prism 4. The interference filter prism 4 transfers the first light incident from the quarter-wave plate 5 to the beam splitter 3. The beam splitter 3 transfers the first light incident from the interference filter prism 4 to a photo detector 10. The photo detector 10 detects information from the first light incident from the beam splitter 3.

The second light of 790nm emitted from the optical source 11 passes through a collimating lens 12 and a beam splitter 13 and then incident onto a converging lens 14. The converging lens 14 transfers the second light incident from the beam splitter 13 to the interference filter prism 4 in convergence light form. The interference filter prism 4 transfers the second light incident from the converging lens 14 to the quarter-wave plate 5 in divergence light form. The quarter-wave plate 5 transfers the second light incident from the interference filter prism 4 to the variable aperture 6. The variable aperture 6 transmits only a part of the second light incident from the quarter-wave plate 5 and transfers the transmitted second light to the objective lens 7 in divergence light form. The reason why the second light is incident to the objective lens 7 in diverging form is for focusing the second light on the information recording surface of the CD-R 9 without causing generation of spherical aberration.

Figure 2 is a view for explaining the thin-film type variable aperture 6 of Figure 1. The thin-film type variable aperture 6 has a structure of selectively transmitting the light incident to areas whose numerical aperture (NA) is less than or equal to 0.6. A region 1 is a region whose numerical aperture is less than or equal to 0.45, in which incident light of 790nm and 660nm is totally transmitted. A region 2 is a region whose numerical aperture ranges from 0.45. to 0.6. in which a dielectric thin film is coated and the light of 660nm wavelength is totally transmitted and the light of 790nm wavelength is totally reflected. The region 1 is made of a quartz $(SiO_2)$ thin-film in order to remove an optical aberration generated by the region 2 where the dielectric thin-film is coated. The variable aperture 6 having the transmission characteristic totally transmits the first light of 660nm wavelength irrespective of the region and totally transmits the second light of 790nm wavelength which is incident into the region 1 whose numerical aperture is less than 0.45 to be transferred to the objective lens 7, and totally reflects the second light which is incident into the region 2 whose numerical aperture is more than or equal to 0.45. Thus, the numerical aperture with respect to the light incident to the objective lens 7 is limited according to its wavelength.

The objective lens 7 focuses the second light incident from the thin-film type variable aperture 6 on the information recording surface of the CD-R 9 whose thickness is 1.2mm, thereby forming an optical spot. The second light reflected from the information recording surface of the CD-R 9 passes the objective lens 7, the variable aperture 6 and the quarter-wave plate 5, in turn and then incident to the interference filter prism 4. The interference filter prism 4 reflects the second light incident from the quarter-wave plate 5 to a converging lens 14. The converging lens 14 transfers the second light to a beam splitter 13. The beam splitter 13 transfers the second light incident from the converging lens 14 to a photo detector 15. The photo detector 15 receives the second light from the beam splitter 13 and detects information from the received second light. Thus, the optical recording and pickup head of Figure 1 can perform recording and reproduction of information with respect to both the DVD 8 and the CD-R 9.

However, the optical recording and pickup head of Figure 1 includes a particular variable aperture 6 in order to selectively limit the numerical aperture with respect to the light incident to the objective lens 7 according to the wavelength of the incident light. Since a quartz thin film is coated on the region 1 of the variable aperture 6 and a multilayer dielectric thin film having a thickness of about one micrometer is configured on the region 2 thereof, a manufacturing process is complicated and a production cost becomes high. Also, since the second light for use in a CD-R which is incident to the region whose numerical aperture is more than or equal to 0.45 is totally reflected, it is not appropriate for adapting itself to an optical system of an optical recording and pickup head for use in a CD-RW requiring a larger numerical aperture of about 0.5 or more and a higher optical efficiency for recording.

It is an aim of the present invention to provide an optical recording and pickup head for use in both a DVD and a CD-RW.

According to the present invention there is provided an optical recording and pickup head according to claim 1 appended hereto or claim 36 appended hereto. Also according to the present invention there is provided a lens as set forth in claim 22 appended hereto. Preferred features of the present invention will be apparent from the dependent claims and the description which follows.

According to a first aspect of the present invention there is provided an optical pickup head for performing recording on and reproduction of information from a plurality of optical discs with respectively different wavelengths, the optical recording and pickup head comprising: a first optical source for emitting first light having a first predetermined wavelength; a second optical source for emitting second light having a longer wavelength relative to the first light; an objective lens for focusing the light emitted from the first and second optical sources on the information recording surfaces of a respective one of the plurality of optical discs; characterised by: a lens for substantially totally transmitting the first light without diffraction to the objective lens and for diffracting the second light toward the optical axis of the objective lens.

Preferably, said optical pickup head comprises a photodetector and an optical path altering unit for transferring the light emitted from the first and second optical sources to the objective lens and transferring the first and second light reflected from the information recording surfaces of the plurality of discs to the photo detector respectively.

Preferably, said lens comprises a first area and second area each having a different optical characteristic on a light receiving plane which receives the incident light, in which said first area comprises an optical center of the light receiving plane and said second area is located at the outside of the first area.

Preferably, said first area substantially totally transmits the first and second incident light and said second area totally transmits the incident first light and diffracts most of the incident second light toward the optical axis of the objective lens.

Preferably, said second area has an annular shape centered on the optical axis of said lens.

Preferably, said second area comprises diffraction gratings.

Preferably, said diffraction gratings are formed facing said optical path altering unit.

Preferably, said diffraction gratings are etched shallow as they become farther from the optical center of said lens.

Preferably, said diffraction gratings have a staircase or saw-tooth pattern structure in a radial direction.

Preferably, said diffraction gratings have a staircase or saw-tooth pattern structure which is periodically repeated.

Preferably, said diffraction gratings have the same step difference.

Preferably, said diffraction gratings are configured in the number satisfying the following equation in a staircase pattern structure of one cycle:

$$N = \lambda_1/(\lambda_2 - \lambda_1)$$

where N denotes the integer number of the stairs of diffraction gratings, $\lambda_1$ denotes the wavelength of the first light, and $\lambda_2$ denotes the wavelength of the second light.

Preferably, said diffraction gratings have transmission efficiency coefficients satisfying the following equation with respect to the second light incident from the optical path altering unit

$$T_m = \frac{1}{T} \int_o^T \exp\left(\frac{2\pi i m}{T}\right) \chi) T_j(\chi) dx$$

where Tm denotes the transmission efficiency coefficient of m-th diffraction order, T denotes the width of the staircase type diffraction grating structure corresponding to one cycle, m denotes the diffraction order number, $\pi$ denotes the ratio of the circumference of a circle to its diameter, i denotes the imaginary unit, $\chi$ denotes the distance from the optical center of the lens, and $T_j(\chi)$ denotes the transmission efficiency coefficient at $\chi$.

Preferably, in said staircase type diffraction grating structure of one cycle each diffraction grating which is located on the j-th position from the optical center of the lens has a transmission efficiency coefficient $T_j(\chi)$ satisfying the following equation,

$$T_j(\chi) = \exp\left(\frac{(2j)\pi i(n - n_0)d}{N\lambda}\right)$$

where $\lambda$ denotes the wavelength of the incident light, d denotes the depth of the diffraction grating which is etched in the deepest in one cycle of the staircase type diffraction grating structure, n denotes the refractive index of the lens no denotes the refractive index of air, and N is the number of stairs in one cycle grating

Preferably, said diffraction gratings generate phase differences satisfying the following equation,

$$\delta_j = \frac{2\pi i(n-n_0)d_j}{\lambda}$$

where $\delta_j$ denotes the optical phase difference generated by the j-th step difference from the optical center of the lens, $\pi$ denotes the ratio of the circumference of a circle to its diameter, n denotes the refractive index of the lens, no denotes the refractive index of air, and $d_j$ denotes the step difference of the j-th diffraction grating.

Preferably, said first area is an area of the numerical aperture of 0.3 or less, and said second area is an area of the numerical aperture of from 0.3 to 0.5.

Preferably, said second area has a staircase type diffraction grating structure which is repeated two times, and one of the staircase type diffraction grating structure is formed over the area from about 1000μm to about 1500μm in a radial direction from the optical center of the lens and the other is formed over the area from about 1500μm to about 1700μm.

Preferably, said second area diffracts about 70% or more of the photo quantity of the second light incident from the optical path altering unit toward the optical axis of the objective lens.

Preferably, said lens comprises a flat plate lens and the objective lens.

Preferably, said lens comprises a flat plate lens integrated with the objective lens.

Preferably, the plurality of optical discs includes at least first and second optical discs that are a digital versatile disc (DVD) and a read-writable compact disc (CD-RW), respectively, and the first light is used for performing recording and reproduction of information with respect to the first optical disc and the second light is used for performing recording and reproduction of information with respect to the second optical disc.

Preferably, said optical path altering unit comprises a collimating lens for collimating the first and second light incident from the first and second optical sources, to then be transferred to the lens.

Preferably, said optical path altering unit further comprises: a reflective flat plate for transferring the first light emitted from the first optical source to the collimating lens and transferring the first and second light reflected from the information recording surfaces of the optical discs and then returning from the collimating lens, to the photo detector; and a beam splitter for transferring the second light emitted from the second optical source to the collimating lens and transferring the first and second light reflected from the information recording surfaces of the optical discs and then returning from the collimating lens, to the reflective flat plate.

According to a second aspect of the present invention there is provided a lens for receiving light of a respectively different wavelength, the lens comprising a first area, a second area and a third area having a respectively different optical characteristic on a light receiving plane, wherein said first area comprises the optical center of the light receiving plane, said second area is located at the outside of said first area, and said third area is located at the outside of said second area, characterized in that said first and third areas substantially totally transmit, without distortion or diffraction, first and second light having a respectively different wavelength, and said second area totally transmits, without distortion or diffraction, the first light and diffracts and converges most of the second light toward the optical axis of the lens.

Preferably, said second area is formed in annular form. Preferably, said second area comprises diffraction grooves.

Preferably, said diffraction grooves are formed on the plane receiving the first and second light.

Preferably, said diffraction grooves are etched shallow as they become farther from the optical center of said lens.

Preferably, said second area includes one diffraction grating having a staircase type structure in a radial direction.

Preferably, said diffraction grooves have a staircase or saw-tooth pattern structure which is periodically repeated. Preferably, said diffraction grooves have the saw-tooth structure repeating twice.

Preferably, said diffraction grooves are configured in the number satisfying the following equation in a staircase pattern structure,

$$N = \lambda_1/(\lambda_2 - \lambda_1)$$

where N denotes the integer number of diffraction grooves, $\lambda_1$ denotes the wavelength of the first light, and $\lambda_2$ denotes the wavelength of the second light.

Preferably, said diffraction grooves have transmission efficiency coefficients satisfying the following equation with respect to the incident second light,

$$T_m = \frac{1}{T}\int_o^T \exp(\frac{2\pi im}{T})\,\chi)\,T_j(\chi)\,dx$$

where Tm denotes the transmission efficiency coefficient of m-th diffraction order, T denotes the width of the staircase type diffraction groove structure corresponding to one cycle, m denotes the diffraction order number, n denotes the ratio of the circumference of a circle to its diameter, i denotes the imaginary unit, $\chi$ denotes the distance from the optical center of the lens, and $T_j(\chi)$ denotes the transmission efficiency coefficient at $\chi$.

Preferably, in said staircase type diffraction structure of one cycle, each diffraction groove which is located on the j-th position from the optical center of the lens has a transmission efficiency coefficient $T_j(\chi)$ satisfying the following equation,

$$T_j(\chi) = \exp(\frac{(2j)\pi i(n - n_0)d}{N\lambda}$$

where $\lambda$ denotes the wavelength of the incident light, d denotes the depth of the diffraction groove which is etched in the deepest in one cycle of the staircase type diffraction groove structure, n denotes the refractive index of the lens, no denotes the refractive index of air, and N is the number of stairs.

Preferably, said diffraction grooves generate phase differences satisfying the following equation,

$$\delta_j = \frac{2\pi i(n-n_0)d_j}{\lambda}$$

where $\delta_j$ denotes the optical phase difference generated by the j-th step difference from the optical center of the lens, $\pi$ denotes the ratio of the circumference of a circle to its diameter, n denotes the refractive index of the lens, no denotes the reflective index of air, and $d_j$ denotes the step difference of the j-th diffraction grating.

Preferably, said first area is an area of the numerical aperture of 0.3 or less, and said second area is an area of the numerical aperture of from 0.3 to 0.5.

Preferably, said second area has a staircase type structure which is repeated two times, and one of the staircase type structure is formed over the area from about 1000μm to about 1500μm in radial direction from the optical center of the lens and the other is formed over the area from about 1500μm to about 1700μm.

Preferably, said second area diffracts about 70% or more of the photo quantity of the incident second light in the convergence direction with reference to the optical axis.

For a better understanding of the invention, and to show how embodiments of the same may be carried into effect, reference will now be made, by way of example, to the accompanying diagrammatic drawings in which:

Figure 1 shows a conventional optical recording and pickup head capable of performing recording and reproduction of information with respect to a DVD and a CD-R;

Figure 2 shows a thin-film type variable aperture of Figure 1;

Figure 3 shows a schematic view of an optical recording and pickup head capable of performing recording and reproduction of information onto a DVD and a CD-RW according to a first embodiment of the present invention;

Figure 4 shows a configuration of a staircase type flat plate lens;

Figure 5 shows the diffraction grating structure of the staircase type flat plate lens;

Figure 6 is a graphical view showing diffraction efficiency characteristics of the staircase type flat plate lens according to the depths of the diffraction grating;

Figure 7 is a view for explaining the relationship between the diffraction grating depth and the diffraction efficiency in the staircase type flat plate lens;

Figure 8 is a view showing a positional relationship between staircase type flat plate lens and the objective lens;

Figure 9 shows an objective lens integrated with a staircase type flat plate lens; and

Figure 10 shows a schematic view of an optical recording and pickup head capable of performing recording and reproduction of information onto a DVD and a CD-RW according to a second embodiment of the present invention.

Preferred embodiments of the present invention will now be described with reference to the accompanying drawings.

Figure 3 shows an optical recording and pickup head capable of performing recording and reproduction of information onto a DVD and a CD-RW according to a first embodiment of the present invention. The optical recording and pickup head includes a first optical source 31 for emitting first light of a 660nm wavelength, a second optical source 41 for emitting second light of a 790nm wavelength, a photo detector 39 for detecting information from the first and second light reflected from the optical discs 8 and 90, an objective lens 36 for focusing the first and second light on the information recording surfaces of the corresponding optical discs 8 and 90, respectively, and optical elements 32, 33, 34 and 38 and a staircase type flat plate lens 35 for transferring the light emitted from the first and second optical sources 31 and 41 to the objective lens 36 and transferring the first and second light reflected from, the information recording surfaces of the plurality of discs 8 and 90 to the photo detector 39, respectively.

The first optical source 31 emits the first light of 660nm wavelength in order to perform recording and reproduction of information with respect to the DVD 8. A reflective flat plate 32 transfers the first light incident from the first optical source 31 to a beam splitter 33. The beam splitter 33 transmits most of the first light incident from the reflective flat plate 32 and then transfers the same to a first collimating lens 34, while the beam splitter 33 reflects a part of the remaining first light incident from the reflective flat plate 32 and then transfers the same to a photo quantity detector 37. The photo quantity detector 37 detects the photo quantity of the first light incident from the reflective flat plate 32. The collimating lens 34 collimates the first light incident from the beam splitter 33 into parallel light and transfers the same to a staircase type flat plate lens 35. The staircase type flat plate lens 35 substantially totally transmits the first light which is the parallel light incident from the collimating lens 34 without causing any distortion or diffraction and transfers the result to thc objective lens 36. The objective lens 36 has a predetermined focal distance in order to form the first light incident from the staircase type flat plate lens 35 as an optical spot of about 0.9 μm on the information recording surface of the DVD 8. As a result, the first light contains information which is recorded on the position focused on the information recording surface of the DVD 8. The light reflected from the DVD 8 transmits the objective lens 36, the staircase type flat plate lens 35 and the collimating lens 34, in turn, to then be transferred to the beam splitter 33. The beam splitter 33 transfers the first light to a light receiving lens 38. The light receiving lens 38 transfers the first light incident from the beam splitter 33 to the photo detector 39 so that the first light is received at the photo detector 39 in convergence form. The photo detector 39 detects information from the light incident from the light receiving lens 38.

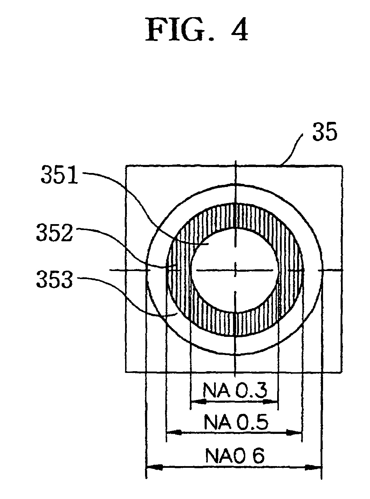

The second optical source 41 emits the second light of 790nm wavelength to the beam splitter 33, in order to perform recording and reproduction of information with respect to the CD-RW 90. The beam splitter 33 has an optical characteristic of reflecting the light of 790nm incident from the second optical source 41, and transmits most of the second light incident from the second optical source 41 to then be transferred to the collimating lens 34, while the beam splitter 33 reflects a part of the remaining second light to the photo quantity detector 37. The photo quantity detector 37 detects the photo quantity of the second light incident from the beam splitter 33. The collimating lens 34 collimates the second light incident from the beam splitter 33 into parallel light, to then be transferred to the staircase type flat plate lens 35. Referring to Figures 4 through 7, the staircase type flat plate lens 35 will be described in detail.

Figure 4 shows the structure of the staircase type flat plate lens 35. As shown, the staircase type flat plate lens 35 includes first area through third areas 351 through 353. The first area 351 is an area whose numerical aperture is less than or equal to about 0.3, the second area 352 is an area whose numerical aperture is from about 0.3 to 0.5, and the third area 353 is an area whose numerical aperture is less than or equal to about 0.6. The second area 352 includes one or more diffraction gratings each having a staircase type structure in a radial direction. The first area 351 has an optical characteristic in which a zero-order diffraction efficiency is approximately 100% with respect to both light of 660nm and 790nm. The zero-order diffraction efficiency is defined as a value which has been indicated as a percentage of a photo quantity of the transmitted light with respect to the incident light quantity while maintaining a proceeding direction of the incident light. The second area 352 has an optical characteristic in which the zero-order diffraction efficiency is about 100% with respect to the light of 660nm, the zero order diffraction efficiency is about 0% and first-order diffraction efficiency is about 70%-or more, with respect to the light of 790nm. The first-order diffraction efficiency is defined as a value which has been indicated as a percentage of the photo quantity of the firstly diffracted light with respect to the incident photo quantity.

Referring back to Figure 3 showing the optical recording and pickup head, the staircase type flat plate lens 35 totally transmits the first light of 660nm and the second light of 790nm which are incident to the first area from the collimating lens 34 without causing any diffraction, to then be transferred to the objective lens 36. Also the first light of 660nm which is incident to the second area of the collimating lens 34 is totally transmitted without causing any diffraction and the second light of 790nm is diffracted as much as about 70% of the incident photo quantity by a first diffractive angle, to then be transferred to the objective lens 36.

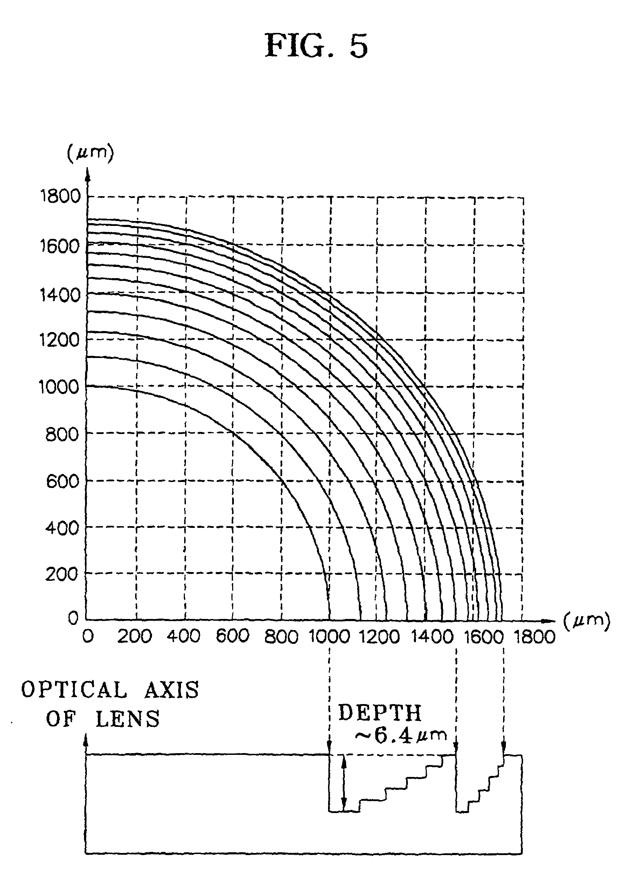

Figure 5 shows the diffraction grating structure formed in the second area of the staircase type flat plate lens 35. In Figure 5, the upper graphical view shows positions where the diffractive gratings are formed in a radial direction on a light receiving plane of the staircase type flat plate lens 35. In the upper graphical view, the vertical and horizontal axis indicate the distances in radial direction from the optical center, where the unit is μm. The upper view shows a quarter of the staircase type flat plate lens 35 of Figure 4. It can be seen that the whole staircase type flat plate lens 35 includes annular gratings. The lower view of Figure 5 indicates the grating structure of the staircase type flat plate lens 35 viewed from the lateral surface perpendicular to the a light receiving plane, which shows positions and depths of the gratings. In the lower view, the left-hand vertical axis indicates the optical axis of the staircase type flat plate lens 35. As shown, the etched maximum depth is 6.4μm in the staircase type flat plate lens 35. The staircase type flat plate lens 35 includes staircase type gratings each of which the depth becomes shallower and the width becomes narrower, as it is farther from the optical center of the light receiving plane. In the staircase type flat plate lens 35, the staircase type gratings are repeated. For example, in the lower view of Figure 5, the staircase type gratings are formed in the positions each of which the radius is from 1000μm to 1500μm, and the staircase type gratings are also formed in the positions each of which the radius is from 1500μm to 1700μm, which shows that the staircase type gratings are repeated. The staircase type gratings are installed facing the collimating lens 34. Accordingly, a spherical aberration occurring when the second light is used can be removed.

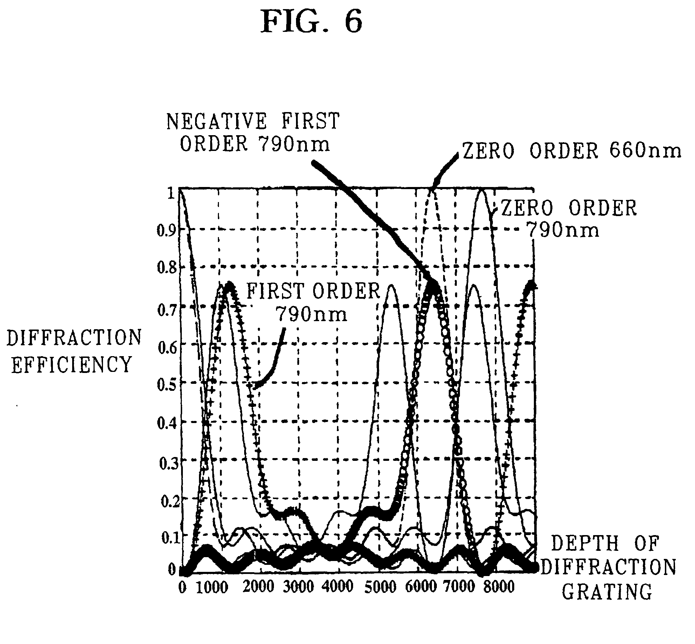

Figure 6 is a graphical view showing diffraction efficiency characteristics of the staircase type flat plate lens 35 according to the depths of the diffraction gratings. In the graph, the horizontal axis indicates the depth of the diffraction grating in unit of nanometer (nm) and the vertical axis indicates the diffraction efficiency. In the graph, a dotted curve indicates a zero order diffraction efficiency value with respect to the light of 660nm varying according to the depth of the grating. A curve composed of connection of small circles indicates a first order diffraction efficiency value with respect to the light of 790nm. The characters and figures in the boxes indicate the diffraction order number considering the direction and the wavelength of the incident light, respectively. The diffraction order number which is negative (-) indicates that the light is diffracted toward the optical axis of the objective lens 36. Otherwise the light is diffracted in the direction farther from the optical axis of the objective lens 36. As shown, when the depth of the staircase type flat plate lens 35 is 6400nm, that is, 6.4 μm, the zero-order diffraction efficiency of the staircase type flat plate lens 35 with respect to the first light of 660nm is one (1) and the negative (-) first order diffraction efficiency of the staircase type flat plate lens with respect to the second light of 790nm is 0.75. Therefore, in the optical pickup of Figure 3, the zero order diffraction efficiency with respect to the light of 660nm is made close to 100% and the zero order diffraction efficiency does not occur with respect to the light of 790nm. Also, in order to heighten at maximum the optical efficiency of the second light of the 790nm which is used for performing recording and reproduction of information with respect to the CD-RW 90, the depth of the diffractive grating which is the deepest in the staircase type flat plate lens 35 is preferably about 6.4 μm.

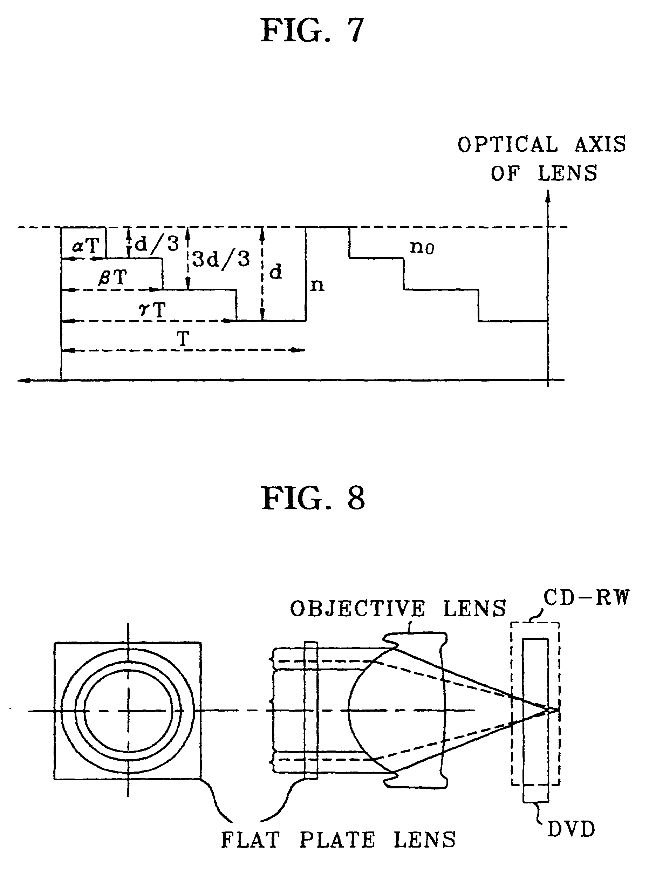

Figure 7 is a view for explaining the relationship between the diffraction grating depth and the diffraction efficiency in the staircase type flat plate lens 35. In Figure 7, the right-hand vertical axis indicates the optical axis of the staircase type flat plate lens 35, and the horizontal axis thereof indicates a radial direction on the light receiving plane. As shown, the T indicates one cycle of the staircase type diffraction gratings. In the staircase type flat plate lens 35 of Figure 7, three diffraction gratings make one cycle T. In the drawing, $\alpha$, $\beta$ and $\gamma$ are coefficients which are larger than 0 and less than 1, in which the relationship of $\alpha < \beta < \gamma$ is established. Also, n denotes a refractive index of the staircase type flat plate lens 35, in which no is the refractive index of air which is normally 1. Assuming that any one position in radial direction in the staircase type flat plate lens 35 is $\chi$, the staircase type flat plate lens 35 has a transmission efficiency coefficient Tm which satisfies the following equation (1).

$$T_m = \frac{1}{T} \int_o^T \exp(\frac{2\pi im}{T}\chi)\, T(\chi)\, dx \qquad (1)$$

Here, T denotes the width of the staircase type diffraction grating structure corresponding to one cycle, m denotes the diffraction order number, $\pi$ denotes the ratio of the circumference of a circle to its diameter, i denotes the imaginary unit, and $T(\chi)$ denotes the transmission efficiency coefficient at $\chi$. The optical efficiency is determined by squaring a complex number with the transmission efficiency coefficient.

In more detail, the first diffraction grating of the staircase type flat plate lens 35 which is located at interval of $\alpha T < \chi < \beta T$ has a transmission efficiency coefficient $T(\chi)$ which satisfies the following equation (2).

$$T(\chi) = \exp(\frac{2\pi i(n-n_0)d}{3\lambda}) \qquad (2)$$

Here, n denotes a refractive index of the flat plate lens, $n_0$ denotes the refractive index of air, d denotes the maximum depth of the diffraction grating, 3 is the number of the diffraction gratings installed within one cycle of the diffraction grating structure, and λ denotes the wavelength of the incident light. The optical efficiency is determined by squaring a complex number with the transmission efficiency coefficient.

The second diffraction grating of the staircase type flat plate lens 35 located at interval of $\beta T < \chi < \gamma T$ has the transmission efficiency coefficient $T(\chi)$ which satisfies the following equation (3).

$$T(\chi) = \exp\left(\frac{4\pi i(n-n_0)d}{3\lambda}\right) \qquad (3)$$

The third diffraction grating of the staircase type flat plate lens 35 located at interval of $\gamma T < \chi < T$ has the transmission efficiency coefficient $T(\chi)$ which satisfies the following equation (4).

$$T(\chi) = \exp\left(\frac{6\pi i(n-n_0)d}{3\lambda}\right) \qquad (4)$$

Also, the transmission efficiency coefficient of the 0-th diffraction grating of the staircase type fiat plate lens 35 located at interval of $0 < \chi < \alpha T$ is $T(\chi) = 1.0$.
Meanwhile, the staircase type flat plate lens 35 includes diffraction gratings of the number which satisfies the following equation (5) within one cycle of the diffraction grating structure.

$$N = \lambda_1/(\lambda_2 - \lambda_1) \qquad (5)$$

Here, N is an integer, indicating the number of the diffraction gratings in a staircase type diffraction grating structure, $\lambda_1$ denotes the wave-length of the first light, and $\lambda_2$ denotes the wavelength of the second light.
Also, the step differences between the diffraction gratings in the staircase type flat plate lens 35 are all same. The step difference creates a phase difference satisfying the following equation (6) with respect to thc second light having the wavelength of 790nm. As a result, there is no phase difference between the second light incident to the area of the numerical aperture of 0.3 or less and the second light incident to the area of the numerical aperture of from 0.3 to 0.5. Accordingly, a spherical aberration is removed.

$$\delta_i = \frac{2\pi i(n - n_0)d_i}{\lambda} \qquad (6)$$

Here, $\delta_i$ denotes an optical phase difference made by i-th step difference from the optical center of the flat plate lens 35, $\pi$ denotes the ratio of the circumference of a circle to its diameter, and $d_i$ denotes the depth of the i-th step difference.
Referring back to Figure 3, the optical recording and pickup head employs the staircase type flat plate lens 35. The staircase type flat plate lens 35 totally transmits the second light incident to the area of the numerical aperture of 0.3 or less, to then be transferred to the objective lens 36, and negatively first order diffracts most of the second light incident to the area of the numerical aperture of from 0.3 to 0.5 toward the optical axis of the objective lens 36, to then be transferred to the objective lens 36. The second light which is focused on and reflected from the information recording surface of the CD-RW 90 by the objective lens 36 transmits the objective lens 36, the staircase type flat plate lens 35, the collimating lens 34 and the beam splitter 33, in turn, to then be incident to the reflective flat plate 32. The reflective flat plate 32 transfers the second light incident from the beam splitter 33 to the light receiving lens 38. The light receiving lens 38 transfers the second light from the reflective flat plate 32 to the photo detector 39. The photo detector 39 detects information from the second light incident from the reflective flat plate 32.

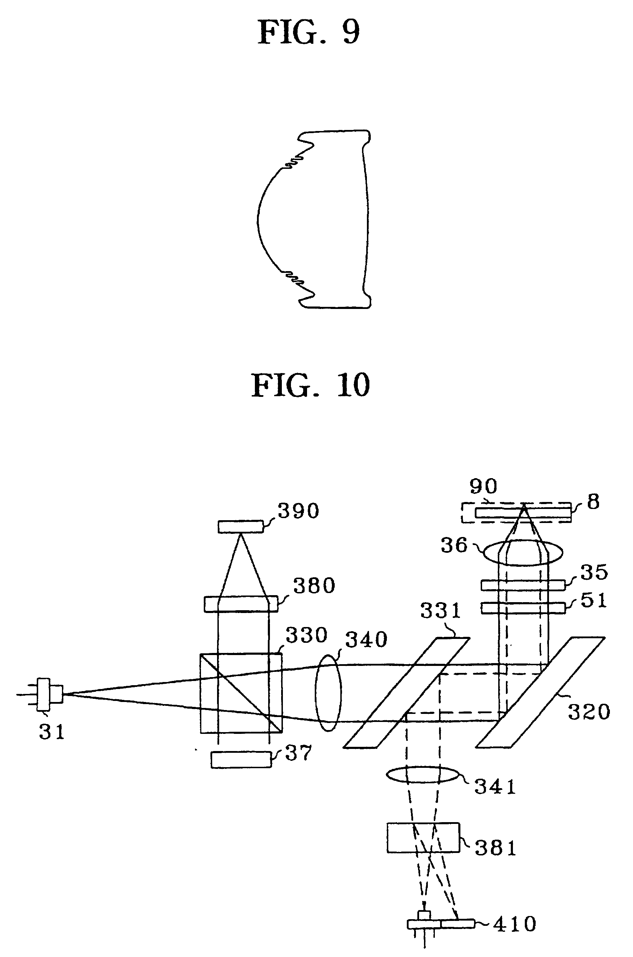

Figure 8 is a view showing a positional relationship between the staircase type flat plate lens and the objective lens. Figure 9 shows an objective lens integrated with a staircase type flat plate lens. As shown, the staircase type flat plate lens can be integrated with an objective lens by forming the diffraction grating structure on any one light receiving plane of the objective lens.
Figure 10 shows a schematic view of an optical recording and pickup head capable of performing recording and reproduction of information onto a DVD 8 and a CD-RW 90 according to a second embodiment of the present invention. As shown, a first optical source 31 emits first light of 660nm to a first beam splitter 330. The first beam splitter 330 transmits most of the first light incident from the first optical source 31 to a first collimating lens 340, and transfers a part of the remaining first light to a photo quantity detector 37. The photo quantity detector 37 detects a photo quantity of the first light incident from the first beam splitter 330. The first collimating lens 340 collimates the light incident from the first beam splitter 330 into parallel light, to then be transferred to a second beam splitter 331. The second beam splitter 331 is an optical element having an optical characteristic of transmitting or reflecting the incident light according to its wavelength, in which the light of 660nm is totally transmitted and the light of 790nm is totally reflected. The second beam splitter 331 transfers the light incident from the first beam splitter 330 to a reflective mirror 320. Meanwhile, a second optical source and photo detector 410 emits second light of 790nm to a second hologram type photo detection lens 381. The second hologram type photo detection lens 381 transfers the second light incident from the second optical source 410 to a second collimating lens 341. The second collimating lens 341 collimates the second light incident from the second hologram type photo detection lens 381 to then be transferred to the second beam splitter 331. The second beam splitter 331 reflects the second light incident from the second collimating lens 341 to then be transferred to the reflective mirror 320. The reflective mirror 320 reflects the first and second light incident from the second beam splitter 331 to a quarter-wave plate 51. The quarter-wave plate 51 changes the polarization direction of the incident light. The first and second light incident to the quarter-wave plate 51 from the reflective mirror 320 passes through a flat plate lens 35, and then is focused on each information recording surface of the optical discs 8 and 90 by an objective lens 36. The first and second light reflected from the optical discs 8 and 90 is incident to the second beam splitter 331 via the objective lens 36, the flat plate lens 35, the quarter-wave plate 51 and the reflective mirror 320. The second beam splitter 331 transmits the first light incident from the reflective mirror 320 toward the first collimating lens 340 and reflects the second light incident from the reflective mirror 320 toward the second collimating lens 341. The first light incident from the first collimating lens 340 to the first beam splitter 330 is transferred to the first hologram type photo detection lens 380 and a first photo detector 390. The first photo detector 390 detects information from the incident first light. Meanwhile, the second light incident from the reflective mirror 320 to the second beam splitter 331 transmits the second collimating lens *341* and the second hologram type photo detection lens 381 to then be incident to a second photo detector 410. The second photo detector 410 detects information from the incident second light. In the optical pickup of Figure 10, an optical unit comprised of the reflective mirror 320, the quarter-wave plate 51, the flat plate lens 35 and the objective lens 36 is movable, while another optical unit comprised of the remaining optical elements except the above optical elements is fixed.

Even though the embodiments of the present invention describe the diffraction grating or diffraction groove of the flat plate lens having a staircase type structure, a diffraction grating or diffraction groove of a flat plate lens having a saw-tooth structure can be employed.

As described above, the optical recording and pickup head according to the present invention is compatible with both the DVD 8 and the CD-RW 90. In particular, in the case that information is recorded on and reproduced from the CD-RW 90, the light of 790nm incident with the numerical aperture of from 0.3 to 0.5 is not totally reflected as in the variable aperture of Figure 1. and most of the photo quantity is negatively first order diffracted toward the center of the objective lens 36, thereby providing a relatively high optical efficiency.

**Claims**

1.  An optical pickup head for performing recording on and reproduction of information from a plurality of optical discs with respectively different wavelengths, the optical recording and pickup head comprising:

    a first optical source (31) for emitting first light having a first predetermined wavelength;

    a second optical source (41) for emitting second light having a longer wavelength relative to the first light;

    an objective lens (36) for focusing the light emitted from the first and second optical sources on the information recording surfaces of a respective one of the plurality of optical discs (8, 90);

    **characterised by**:

    a lens (35,36) for substantially totally transmitting the first light without diffraction to the objective lens (36) and for diffracting the second light toward the optical axis of the objective lens (36).

2.  The optical pickup head according to claim 1, comprising:

    a photo detector (39);

    an optical path altering unit (33) for transferring the light emitted from the first and second optical sources to the objective lens and transferring the first and second light reflected from the information recording surfaces of the plurality of discs to the photo detector (39), respectively.

3.  The optical pickup head according to claim 1 or 2, wherein said lens (35,36) comprises a first area (351) and a second area (352) each having a different optical characteristic on a light receiving plane which receives the incident light, in which said first area comprises an optical center of the light receiving plane and said second area is located at the outside of the first area.

4.  The optical pickup head according to claim 3, wherein said first area (351) substantially totally transmits the first and second incident light and said second area (352) totally transmits the incident first light and diffracts most of the incident second light toward the optical axis of the objective lens.

5.  The optical pickup head according to claim 3 or 4, wherein said second area (352) has an annular shape centered on the optical axis of said lens (35,36).

6.  The optical pickup head according to claim 3, 4 or 5, wherein said second area (352) comprises diffraction gratings.

7.  The optical pickup head according to claim 6, wherein said diffraction gratings are formed facing said optical path altering unit (33).

8.  The optical head according to claim 6 or 7, wherein said diffraction gratings are etched shallow as they become farther from the optical center of said lens (35,36).

9. The optical pickup head according to any of claims 6 to 8, wherein said diffraction gratings have a staircase or saw-tooth pattern structure in a radial direction.

10. The optical pickup head according to any of claims 6 to 9, wherein said diffraction gratings have a staircase or saw-tooth pattern structure which is periodically repeated.

11. The optical pickup head according to any of claims 6 to 10, wherein said diffraction gratings have the same step difference.

12. The optical pickup head according to any of craims 6 to 11, wherein said diffraction gratings are configured in the number satisfying the following equation in a staircase pattern structure of one cycle,

$$N = \lambda_1/(\lambda_2 - \lambda_1)$$

where N denotes the integer number of the stairs of diffraction gratings, $\lambda_1$ denotes the wavelength of the first light, and $\lambda_2$ denotes the wavelength of the second light.

13. The optical pickup head according to any of claims 6 to 12, wherein said diffraction gratings have transmission efficiency coefficients satisfying the following equation with respect to the second light incident from the optical path altering unit,

$$T_m = \frac{1}{T} \int_o^T \exp(\frac{2\pi i m}{T} \chi) T_j(\chi) dx$$

where $T_m$ denotes the transmission efficiency coefficient of m-th diffraction order, T denotes the width of the staircase type diffraction grating structure corresponding to one cycle, m denotes the diffraction order number, $\pi$ denotes the ratio of the circumference of a circle to its diameter, i denotes the imaginary unit, $\chi$ denotes the distance from the optical center of the lens (35,36), and $T_j(\chi)$ denotes the transmission efficiency coefficient at $\chi$.

14. The optical pickup head according to any of claims 6 to 13, wherein in said staircase type diffraction grating structure of one cycle each diffraction grating which is located on the j-th position from the optical center of the lens (35,36) has a transmission efficiency coefficient $T_j(\chi)$ satisfying the following equation,

$$T_j(\chi) = \exp(\frac{(2j)\pi i(n-n_0)d}{N\lambda})$$

where $\lambda$ denotes the wavelength of the incident light, d denotes the depth of the diffraction grating which is etched in the deepest in one cycle of the staircase type diffraction grating structure, n denotes the refractive index of the lens (35,36), $n_0$ denotes the refractive index of air, and N is the number of stairs in one cycle grating.

15. The optical pickup head according to any of claims 6 to 14, wherein said diffraction gratings generate phase differences satisfying the following equation,

$$\delta_j = \frac{2\pi i(n - n_0)d_j}{\lambda}$$

where $\delta_j$ denotes the optical phase difference generated by the j-th step difference from the optical center of the lens (35,36), $\pi$ denotes the ratio of the circumference of a circle to its diameter, n denotes the refractive index of the lens (35,36), $n_o$ denotes the refractive index of air, and $d_j$ denotes the step difference of the j-th diffraction grating.

16. The optical pickup head according to any of claims 3 to 15, wherein said first area (351) is an area of the numerical aperture of 0.3 or less, and said second area (352) is an area of the numerical aperture of from 0.3 to 0.5.

17. The optical pickup head according to any of claims 3 to 16, wherein said second area (352) has a staircase type diffraction grating structure which is repeated two times, and one of the staircase type diffraction grating structure is formed over the area from about 1000 μm to about 1500μm in radial direction from the optical center of the lens (35,36) and the other is formed over the area from about 1500μm to about 1700μm.

18. The optical pickup head according to any of claims 3 to 17, wherein said second area diffracts about 70% or more of the photo quantity of the second light incident from the optical path altering unit toward the optical axis of the objective lens.

19. The optical pickup head according to any of claims 1 to 18, wherein said lens (35,36) comprises a flat plate lens (35) and the objective lens (36).

20. The optical pickup head according to any of claims 1 to 18, wherein said lens (35,36) comprises a flat plate lens (35) integrated with the objective lens (36).

**21.** The optical pickup head according to any of claims 1 to 20, wherein the plurality of optical discs includes at least first and second optical discs that are a digital versatile disc (DVD) and a read-writable compact disc (CD-RW), respectively, and the first light is used for performing recording and reproduction of information with respect to the first optical disc (8) and the second light is used for performing recording and reproduction of information with respect to the second optical disc (90).

**22.** The optical pickup head according to any of claims 2 to 21, wherein said optical path altering unit comprises a collimating lens (34) for collimating the first and second light incident from the first and second optical sources, to then be transferred to the lens (35,36).

**23.** The optical pickup head according to claim 22, wherein said optical path altering unit further comprises:

a reflective flat plate (32) for transferring the first light emitted from the first optical source to the collimating lens (34) and transferring the first and second light reflected from the information recording surfaces of the optical discs and then returning from the collimating lens, to the photo detector (39); and

a beam splitter (33) for transferring the second light emitted from the second optical source to the collimating lens and transferring the first and second light reflected from the information recording surfaces of the optical discs and then returning from the collimating lens, to the reflective flat plate (32).

**24.** A lens for receiving light of a respectively different wavelength, the lens (35) comprising a first area (351), a second area (352) and a third area (353) having a respectively different optical characteristic on a light receiving plane, wherein said first area (351) comprises the optical center of the light receiving plane, said second area (352) is located at the outside of said first area (351), and said third area (353) is located at the outside of said second area (352), **characterized in that** said first and third areas (351,353) substantially totally transmit, without distortion or diffraction, first and second light having a respectively different wavelength, and said second area (352) totally transmits, without distortion or diffraction, the first light and diffracts and converges most of the second light toward the optical axis of the lens (35).

**25.** The lens according to claim 24, wherein said second area (352) is formed in annular form.

**26.** The lens according to claim 24 or 25, wherein said second area (352) comprises diffraction grooves.

**27.** The lens according to claim 26, wherein said diffraction grooves are formed on the plane receiving the first and second light.

**28.** The lens according to claim 26 or 27, wherein said diffraction grooves are etched shallow as they become farther from the optical center of said lens.

**29.** The lens according to any of claims 26 to 28, wherein said second area (352) includes one diffraction grating having a staircase type structure in a radial direction.

**30.** The lens according to any of claims 26 to 28, wherein said diffraction grooves have a staircase or sawtooth pattern structure which is periodically repeated.

**31.** The lens according to claim 30, wherein said diffraction grooves have the saw-tooth structure repeating twice.

**32.** The lens according to claim 30, wherein said diffraction grooves are configured in the number satisfying the following equation in a staircase pattern structure,

$$N = \lambda_1/(\lambda_2 - \lambda_1)$$

where N denotes the integer number of diffraction grooves, $\lambda_1$ denotes the wavelength of the first light, and $\lambda_2$ denotes the wavelength of the second light.

**33.** The lens according to any of claims 27 to 32, wherein said diffraction grooves have transmission efficiency coefficients satisfying the following equation with respect to the incident second light,

$$T_m = \frac{1}{T} \int_o^T \exp(\frac{2\pi im}{T}\chi) T_j(\chi) d\chi$$

where $T_m$ denotes the transmission efficiency coefficient of m-th diffraction order, T denotes the width of the staircase type diffraction groove structure corresponding to one cycle, m denotes the diffraction order number, $\pi$ denotes the ratio of the circumference of a circle to its diameter, i denotes the imaginary unit, $\chi$ denotes the distance from the optical center of the lens, and $T_j(\chi)$ denotes the transmission efficiency coefficient at $\chi$.

**34.** The lens according to claim 32 or 33, wherein in said staircase type diffraction structure of one cycle, each diffraction groove which is located on the j-th position from the optical center of the lens has a transmission efficiency coefficient $T_j(\chi)$ satisfying the following equation,

$$T_j(\chi) = \exp(\frac{(2j)\pi i(n-n_0)d}{N\lambda})$$

where $\lambda$ denotes the wavelength of the incident light, d denotes the depth of the diffraction groove which is etched in the deepest in one cycle of the staircase type diffraction groove structure, n denotes the refractive index of the lens (35,36), no denotes the refractive index of air, and N is the number of stairs.

35. The lens according to claim 33 or 34, wherein said diffraction grooves generate phase differences satisfying the following equation,

$$\delta_j = \frac{2\pi i(n-n_0)d_j}{\lambda}$$

where $\delta_j$ denotes the optical phase difference generated by the j-th step difference from the optical center of the lens (35,36), $\pi$ denotes the ratio of the circumference of a circle to its diameter, n denotes the refractive index of the lens (35,36), no denotes the reflective index of air, and $d_j$ denotes the step difference of the j-th diffraction grating.

36. The lens according to any of claims 24 to 35, wherein said first area is an area of the numerical aperture of 0.3 or less, and said second area is an area of the numerical aperture of from 0.3 to 0.5.

37. The lens according to any of claims 24 to 36, wherein said second area has a staircase type structure which is repeated two times, and one of the staircase type structure is formed over the area from about 1000 μm to about 1500μm in radial direction from the optical center of the lens and the other is formed over the area from about 1500μm to about 1700μm.

38. The lens according to any of claims 24 to 37, wherein said second area diffracts about 70% or more of the photo quantity of the incident second light in the convergence direction with reference to the optical axis.

**Patentansprüche**

1. Optischer Abnehmerkopf zum Ausführen von Aufzeichnung von Informationen auf und Wiedergabe derselben von einer Vielzahl optischer Platten mit jeweils unterschiedlichen Wellenlängen, wobei der optische Aufzeichnungs-und-Abnehmer-Kopf umfasst:

eine erste Lichtquelle (31), die erstes Licht mit einer ersten vorgegebenen Wellenlänge emittiert;

eine zweite Lichtquelle (41), die zweites Licht mit einer relativ zu dem ersten Licht längeren Wellenlänge emittiert;

eine Objektivlinse (36), die das von der ersten und der zweiten Lichtquelle emittierte Licht auf die Informationsaufzeichnungsflächen einer entsprechenden der Vielzahl optischer Platten (8, 90) fokussiert;

**gekennzeichnet durch:**

eine Linse (35, 36), die das erste Licht im Wesentlichen vollständig ohne Beugung zu der Objektivlinse (36) durchlässt und das zweite Licht auf die optische Achse der Objektivlinse (36) zu beugt.

2. Optischer Abnehmerkopf nach Anspruch 1, der umfasst:

einen Fotodetektor (39);

eine Lichtweg-Änderungseinheit (33), die jeweils das von der ersten und der zweiten Lichtquelle emittierte Licht zu der Objektivlinse leitet und das erste sowie das zweite Licht, die von den Informationsaufzeichnungsflächen der Vielzahl von Platten reflektiert werden, zu dem Fotodetektor (39) leitet.

3. Optischer Abnehmerkopf nach Anspruch 1 oder 2, wobei die Linse (35, 36) einen ersten Bereich (351) und einen zweiten Bereich (352), die jeweils unterschiedliche optische Eigenschaften haben, auf einer Lichtempfangsfläche umfasst, die das auftreffende Licht empfängt, wobei der erste Bereich einen optischen Mittelpunkt der Lichtempfangsebene umfasst und sich der zweite Bereich an der Außenseite des ersten Bereiches befindet.

4. Optischer Abnehmerkopf nach Anspruch 3, wobei der erste Bereich (351) das erste und das zweite auftreffende Licht im Wesentlichen vollständig durchlässt und der zweite Bereich (352) das auftreffende erste Licht vollständig durchlässt und den Großteil des auftreffenden zweiten Lichtes auf die optische Achse der Objektivlinse zu beugt.

**5.** Optischer Abnehmerkopf nach Anspruch 3 oder 4, wobei der zweite Bereich (352) eine Ringform hat, die auf die optische Achse der Linse (35, 36) zentriert ist.

**6.** Optischer Abnehmerkopf nach Anspruch 3, 4 oder 5, wobei der zweite Bereich (352) Beugungsgitter umfasst.

**7.** Optischer Abnehmerkopf nach Anspruch 6, wobei die Beugungsgitter der Lichtweg-Änderungseinheit (33) zugewandt ausgebildet sind.

**8.** Optischer Abnehmerkopf nach Anspruch 6 oder 7, wobei die Beugungsgitter in größerer Entfernung von dem optischen Mittelpunkt der Linse (35, 36) flach geätzt sind.

**9.** Optischer Abnehmerkopf nach einem der Ansprüche 6 bis 8, wobei die Beugungsgitter eine Treppen- oder Sägezahnmuster-Struktur in einer radialen Richtung haben.

**10.** Optischer Abnehmerkopf nach einem der Ansprüche 6 bis 9, wobei die Beugungsgitter eine Treppen- oder Sägezahnmuster-Struktur haben, die periodisch wiederholt wird.

**11.** Optischer Abnehmerkopf nach einem der Ansprüche 6 bis 10, wobei die Beugungsgitter die gleiche Stufendifferenz haben.

**12.** Optischer Abnehmerkopf nach einem der Ansprüche 6 bis 11, wobei die Beugungsgitter in der Anzahl, die die folgende Gleichung erfüllt, in einer Treppenmuster-Struktur eines Zyklus ausgeführt sind

$$N = \lambda_1 / (\lambda_2 - \lambda_1)$$

wobei N die ganze Zahl der Stufen von Beugungsgittern bezeichnet, $\lambda_1$ die Wellenlänge des ersten Lichts bezeichnet und $\lambda_2$ die Wellenlänge des zweiten Lichts bezeichnet.

**13.** Optischer Abnehmerkopf nach einem der Ansprüche 6 bis 12, wobei die Beugungsgitter Durchlassgradkoeffizienten, die die folgende Gleichung erfüllen, in Bezug auf das zweite Licht haben, das von der Lichtweg-Änderungseinheit auftrifft

$$T_m = \frac{1}{T} \int_0^T \exp(\frac{2\pi i m}{T} \chi) T_j(\chi) d\chi$$

wobei $T_m$ den Durchlassgradkoeffizienten der m-ten Gitterordnung bezeichnet, T die Breite der Treppen-Beugungsgitterstruktur bezeichnet, die einem Zyklus entspricht, m die Gitterordnungszahl bezeichnet, $\pi$ das Verhältnis des Umfangs eines Kreises zu seinem Durchmesser bezeichnet, i die imaginäre Einheit bezeichnet, $\chi$ den Abstand von dem optischen Mittelpunkt der Linse (35, 36) bezeichnet und $T_j(\chi)$ den Durchlassgradkoeffizienten bei $\chi$ bezeichnet.

**14.** Optischer Abnehmerkopf nach einem der Ansprüche 6 bis 13, wobei in der Treppen-Beugungsgitterstruktur eines Zyklus jedes Beugungsgitter, das sich an der j-ten Position von dem optischen Mittelpunkt der Linse (35, 36) aus befindet, einen Durchlassgradkoeffizienten $T_j(\chi)$ hat, der die folgende Gleichung erfüllt

$$T_j(\chi) = \exp(\frac{(2j)\pi i(n-n_0)d}{N\lambda})$$

wobei $\lambda$ die Wellenlänge des auftreffenden Lichtes bezeichnet, d die Tiefe des Beugungsgitters bezeichnet, das in einem Zyklus der Treppen-Beugungsgitterstruktur am tiefsten geätzt ist, n den Brechungsindex der Linse (35, 36) bezeichnet, $n_0$ den Brechungsindex von Luft bezeichnet, und N die Anzahl von Treppen in einem Zyklus-Gitter ist.

**15.** Optischer Abnehmerkopf nach einem der Ansprüche 6 bis 14, wobei die Beugungsgitter Phasendifferenzen erzeugen, die die folgende Gleichung erfüllen,

$$\delta_j = \frac{2\pi i(n - n_0)d_j}{\lambda}$$

wobei $\delta_j$ die optische Phasendifferenz bezeichnet, die durch die j-te Stufendifferenz von dem optischen Mittelpunkt der Linse (35, 36) aus erzeugt wird, $\pi$ das Verhältnis des Umfangs eines Kreises zu seinem Durchmesser bezeichnet, n den Brechungsindex der Linse (35, 36) bezeichnet, $n_0$ den Brechungsindex von Luft bezeichnet, und $d_j$ die Stufendifferenz des j-ten Beugungsgitters bezeichnet.

**16.** Optischer Abnehmerkopf nach einem der Ansprüche 3 bis 15, wobei der erste Bereich (351) ein Bereich der numerischen Apertur von 0,3 oder weniger ist und der zweite Bereich (352) ein Bereich der numerischen Apertur zwischen 0,3 und 0,5 ist.

**17.** Optischer Abnehmerkopf nach einem der Ansprüche 3 bis 16, wobei der zweite Bereich (252) eine Treppen-Beugungsgitterstruktur hat, die zweimal wiederholt wird, und die eine der Treppen-Beugungsgitterstrukturen über den Bereich zwischen ungefähr 1000 µm und ungefähr 1500 µm in radialer Richtung von dem optischen Mittelpunkt der Linse (35, 36) aus ausgebildet ist und die andere über den Bereich zwischen ungefähr 1500 µm und ungefähr 1700 µm ausgebildet ist.

18. Optischer Abnehmerkopf nach einem der Ansprüche 3 bis 17, wobei der zweite Bereich ungefähr 70 % oder mehr der Lichtmenge der zweiten Lichtes, das von der Lichtweg-Änderungseinheit auftrifft, auf die optische Achse der Objektivlinse zu beugt.

19. Optischer Abnehmerkopf nach einem der Ansprüche 1 bis 18, wobei die Linse (35, 36) eine Flachlinse (35) und die Objektivlinse (36) umfasst.

20. Optischer Abnehmerkopf nach einem der Ansprüche 1 bis 18, wobei die Linse (35, 36) eine Flachlinse (35) umfasst, die eine Einheit mit der Objektivlinse (36) bildet.

21. Optischer Abnehmerkopf nach einem der Ansprüche 1 bis 20, wobei die Vielzahl optischer Platten wenigstens eine erste und eine zweite optische Platte enthält, bei denen es sich um eine DVD bzw. eine CD-RW handelt, und das erste Licht verwendet wird, um Aufzeichnung und Wiedergabe von Informationen bezüglich der ersten optischen Platte (8) durchzuführen, und das zweite Licht verwendet wird, um Aufzeichnung und Wiedergabe zu Informationen bezüglich der zweiten optischen Platte (90) durchzuführen.

22. Optischer Abnehmerkopf nach einem der Ansprüche 2 bis 21, wobei die Lichtweg-Änderungseinheit eine Kollimationslinse (34) umfasst, die das erste und das zweite Licht, die von der ersten und der zweiten Lichtquelle auftreffen, kollimiert, um es dann zu der Linse (35, 36) zu leiten.

23. Optischer Abnehmerkopf nach Anspruch 22, wobei die Lichtweg-Änderungseinheit des Weiteren umfasst:

eine reflektierende Flachplatte (32), die das von der ersten Lichtquelle emittierte Licht zu der Kollimationslinse (34) leitet und das erste sowie das zweite Licht, die von den Informationsaufzeichnungsflächen der optischen Platten reflektiert werden und dann von der Kollimationslinse zurückkehren, zu dem Fotodetektor (39) leitet; und

einen Strahlteiler (33), der das zweite Licht, das von der zweiten Lichtquelle emittiert wird, zu der Kollimationslinse leitet und das erste sowie das zweite Licht, die von den Informationsaufzeichnungsflächen der optischen Platten reflektiert werden und dann von der Kollimationslinse zurückkehren, zu der reflektierenden Flachplatte (32) leitet.

24. Linse zum Empfangen von Licht einer jeweils verschiedenen Wellenlänge, wobei die Linse (35) einen ersten Bereich (351), einen zweiten Bereich (352) und einen dritten Bereich (353), die jeweils unterschiedliche optische Eigenschaften haben, auf einer Lichtempfangsebene umfasst, wobei der erste Bereich (351) den optischen Mittelpunkt der Lichtempfangsebene umfasst, sich der zweite Bereich (352) an der Außenseite des ersten Bereiches (351) befindet und sich der dritte Bereich (353) an der Außenseite des zweiten Bereiches (352) befindet, **dadurch gekennzeichnet, dass** der erste und der dritte Bereich (351, 353) erstes und zweites Licht mit jeweils unterschiedlicher Wellenlänge im Wesentlichen vollständig ohne Verzeichnung oder Beugung durchlassen und der zweite Bereich das erste Licht ohne Verzeichnung oder Beugung im Wesentlichen durchlässt und den Großteil des zweiten Lichtes auf die optische Achse der Linse (35) zu beugt und sammelt.

25. Linse nach Anspruch 24, wobei der zweite Bereich (352) in Ringform ausgebildet ist.

26. Linse nach Anspruch 24 oder 25, wobei der zweite Bereich (352) Beugungsfurchen umfasst.

27. Linse nach Anspruch 26, wobei die Beugungsfurchen auf der Ebene ausgebildet sind, die das erste und das zweite Licht empfängt.

28. Linse nach Anspruch 26 oder 27, wobei die Beugungsfurchen in größerer Entfernung von dem optischen Mittelpunkt der Linse flach geätzt sind.

29. Linse nach einem der Ansprüche 26 bis 28, wobei der zweite Bereich (352) ein Beugungsgitter mit einer Treppenstruktur in einer radialen Richtung enthält.

30. Linse nach einem der Ansprüche 26 bis 28, wobei die Beugungsfurchen eine Treppen- oder Sägezahnmuster-Struktur haben, die periodisch wiederholt wird.

31. Linse nach Anspruch 30, wobei sich die Sägezahnstruktur der Beugungsfurchen zweimal wiederholt.

32. Linse nach Anspruch 30, wobei die Beugungsfurchen in der Anzahl, die die folgende Gleichung erfüllt, in einer Treppenmuster-Struktur ausgeführt sind

$$N = \lambda_1 / (\lambda_2 - \lambda_1)$$

wobei N die ganze Zahl von Beugungsfurchen bezeichnet, $\lambda_1$ die Wellenlänge des ersten Lichtes bezeichnet und $\lambda_2$ die Wellenlänge des zweiten Lichtes bezeichnet.

**33.** Linse nach einem der Ansprüche 27 bis 32, wobei die Beugungsfurchen Durchlassgradkoeffizienten, die die folgende Gleichung erfüllen, in Bezug auf das auftreffende zweite Licht haben

$$T_m = \frac{1}{T} \int_0^T \exp\left(\frac{2\pi i m}{T}\chi\right) T_j(\chi)d\chi$$

wobei den $T_m$ den Durchlassgradkoeffizienten der m-ten Gitterordnung bezeichnet, T die Breite der Treppen-Beugungsfurchenstruktur bezeichnet, die einem Zyklus entspricht, m die Gitterordnungszahl bezeichnet, $\pi$ das Verhältnis des Umfangs eines Kreises zu seinem Durchmesser bezeichnet, i die imaginäre Einheit bezeichnet, $\chi$ den Abstand von dem optischen Mittelpunkt der Linse bezeichnet und $T_j(\chi)$ den Durchlassgradkoeffizienten bei $\chi$ bezeichnet.

**34.** Linse nach Anspruch 32 oder 33, wobei in der Treppen-Beugungsstruktur eines Zyklus jede Beugungsfurche, die sich an der j-ten Position von dem optischen Mittelpunkt der Linse aus befindet, einen Durchlassgradkoeffizienten $T_j(\chi)$ hat, der die folgende Gleichung erfüllt

$$T_j(\chi) = \exp\left(\frac{(2j)\pi i(n-n_0)d}{N\lambda}\right)$$

wobei $\lambda$ die Wellenlänge des auftreffenden Lichtes bezeichnet, d die Tiefe der Beugungsfurche bezeichnet, die in einem Zyklus der Treppen-Beugungsfurchenstruktur am tiefsten geätzt ist, n den Brechungsindex der Linse (35, 36) bezeichnet, $n_0$ den Brechungsindex von Luft bezeichnet, und N die Anzahl von Treppen ist

**35.** Linse nach Anspruch 33 oder 34, wobei die Beugungsfurchen Phasendifferenzen erzeugen, die die folgende Gleichung erfüllen

$$\delta_j = \frac{2\pi i(n - n_0)d_j}{\lambda}$$

wobei $\delta_j$ die optische Phasendifferenz bezeichnet, die durch die j-te Stufendifferenz von dem optischen Mittelpunkt der Linse (35, 36) aus erzeugt wird, n das Verhältnis des Umfangs eines Kreises zu seinem Durchmesser bezeichnet, n den Brechungsindex der Linse (35, 36) bezeichnet, $n_0$ den Brechungsindex von Luft bezeichnet, und $d_j$ die Stufendifferenz des j-ten Beugungsgitters bezeichnet.

**36.** Linse nach einem der Ansprüche 24 bis 35, wobei der erste Bereich ein Bereich der numerischen Apertur von 0,3 oder weniger ist und der zweite Bereich ein Bereich der numerischen Apertur zwischen 0,3 und 0,5 ist.

**37.** Linse nach einem der Ansprüche 24 bis 36, wobei der zweite Bereich eine Treppenstruktur hat, die zweimal wiederholt wird, und eine der Treppenstrukturen über den Bereich zwischen ungefähr 1000 μm und ungefähr 1500 μm in radialer Richtung von dem optischen Mittelpunkt der Linse aus ausgebildet ist und die andere über den Bereich zwischen ungefähr 1500 μm und ungefähr 1700 μm ausgebildet ist.

**38.** Linse nach einem der Ansprüche 24 bis 37, wobei der zweite Bereich ungefähr 70 % oder mehr der Lichtmenge des auftreffenden zweiten Lichtes in der Konvergenzrichtung in Bezug auf die optische Achse beugt.

**Revendications**

**1.** Tète de captage optique servant à réaliser l'enregistrement et la reproduction d'une information sur et à partir d'une pluralité de disques optiques avec des longueurs d'onde respectivement différentes, la tête d'enregistrement et de captage optique comprenant:

une première source optique (31) pour émettre une première lumière possédant une première longueur d'onde prédéterminée;
une seconde source optique (41) pour émettre une seconde lumière possédant une seconde longueur d'onde plus grande que celle de la première lumière;
un objectif (36) pour focaliser la lumière émise par les première et seconde sources optiques sur les surfaces d'enregistrement d'informations de l'un respectif de la pluralité de disques optiques (8, 90);

**caractérisée par**:

une lentille (35, 36) pour transmettre sensiblement totalement la première lumière sans diffraction à l'objectif (36) et pour diffracter la seconde lumière en direction de l'axe optique de l'objectif (36).

**2.** Tête de captage optique selon la revendication 1, comprenant:

un photodétecteur (39);
une unité (33) de modification de trajet optique pour transférer la lumière émise par les première et seconde sources optiques à l'objectif et transférer les première et seconde lumières réfléchies par les surfaces d'enregistrement d'information de la pluralité de disques respectivement vers le photodétecteur (39).

**3.** Tête de captage optique selon la revendication 1 ou 2, dans laquelle ladite lentille (35, 36) comprend une première zone (351) et une secondé zone (352), possédant chacune une caractéristique optique différente dans un plan de réception de lumière, qui reçoit la lumière incidente, ladite première zone comprenant un centre optique du plan de réception de la lumière et ladite seconde zone étant située à l'extérieur de la première zone.

**4.** Tête de captage optique selon la revendication 3, dans laquelle ladite première zone (351) transmet sensiblement totalement les première et seconde lumières incidentes et ladite seconde zone (352) transmet totalement la première lumière incidente et diffracte la majeure partie de la seconde lumière incidente en direction de l'axe optique de l'objectif.

**5.** Tête de captage optique selon la revendication 3 ou 4, dans laquelle ladite seconde zone (352) possède une forme annulaire centrée sur l'axe optique de ladite lentille (35, 36).

**6.** Tête de captage optique selon la revendication 3, 4 ou 5, dans laquelle ladite seconde zone (352) comprend des réseaux de diffraction.

**7.** Tête de captage optique selon la revendication 6, dans laquelle lesdits réseaux de diffraction sont formés en face de ladite unité (33) de modification de trajet optique.

**8.** Tête de captage optique selon la revendication 6 ou 7, dans laquelle lesdits réseaux de diffraction sont formés par attaque chimique de manière à être peu profonds lorsqu'on se rapproche du centre optique de ladite lentille (35, 36).

**9.** Tête de captage optique selon l'une quelconque des revendications 6 à 8, dans laquelle lesdits réseaux de diffraction possèdent une structure en forme d'escalier ou à configuration en dents de scie dans une direction radiale.

**10.** Tête de captage optique selon l'une quelconque des revendications 6 à 9, dans laquelle lesdits réseaux de diffraction possèdent une structure en escalier ou une structure ayant une configuration en dents de scie, qui se répète périodiquement.

**11.** Tête de captage optique selon l'une quelconque des revendications 6 à 10, dans laquelle lesdits réseaux de diffraction possèdent la même différence de pas.

**12.** Tête de captage optique selon l'une quelconque des revendications 6 à 11, dans laquelle lesdits réseaux de diffraction sont présents en un nombre satisfaisant à l'équation suivante dans une structure en forme d'escalier d'un cycle

$$N = \lambda_1/(\lambda_2 - \lambda_1)$$

N désignant le nombre entier de marches de réseaux de diffraction, $\lambda_1$ la longueur d'onde de la première lumière et $\lambda_2$ la longueur d'onde de la seconde lumière.

**13.** Tête de captage optique selon l'une quelconque des revendications 6 à 12, dans laquelle lesdits réseaux de diffraction possèdent des coefficients de rendement de transmission qui satisfont à l'équation suivante en rapport avec la seconde lumière incidente à partir de l'unité de modification de trajet

$$T_m = \frac{1}{T} \int_0^T \exp\left(\frac{2\pi i m}{T} \chi\right) T_j(\chi)\, dx$$

$T_m$ désignant le coefficient de rendement de transmission du m-ème ordre de diffraction, T la largeur de la structure du réseau de diffraction du type en escalier correspondant à un cycle, m le numéro d'ordre de diffraction, $\pi$ le rapport de la circonférence du cercle à son diamètre, i l'unité imaginaire, x la distance du centre optique de la lentille (35, 36) et $T_j(\chi)$ le coefficient de rendement de transmission pour $\chi$.

**14.** Tête de captage optique selon l'une des revendications 6 à 13, dans laquelle dans ladite structure de diffraction du type en escalier d'un cycle, chaque réseau de diffraction, qui est situé dans la j-ème position à partir du centre optique de la lentille (35, 36) possède un coefficient de rendement de transmission $T_j(\chi)$ satisfaisant à l'équation suivante

$$T_j(\chi) = \exp\left(\frac{(2j)\pi i(n - n_0)d}{N\lambda}\right)$$

$\lambda$ désignant la longueur d'onde de la lumière incidente, d la profondeur du réseau de diffraction qui est formée par attaque chimique dans la partie la plus profonde dans un cycle de la structure du réseau de diffraction du type en escalier, n l'indice de réfraction de la lentille (35, 36), $n_0$ l'indice de réfraction de l'air et N le nombre de pas dans un réseau d'un cycle.

15. Tête de captage optique selon l'une quelconque des revendications 6 à 14, dans laquelle lesdits réseaux de diffraction génèrent des différences de phase satisfaisant à l'équation suivante:

$$\delta_j = \exp\left(\frac{2\pi i(n - n_0)d_j}{\lambda}\right)$$

$\delta_j$ désignant la différence de phase optique générée par la j-ème différence de pas par rapport au centre optique de la lentille (35, 36), n le rapport de la circonférence d'un cercle à son diamètre, n l'indice de réfraction de la lentille (35, 36), $n_0$ l'indice de réfraction de l'air et $d_j$ la différence de pas du j-ème réseau de diffraction.

16. Tête de captage optique selon l'une quelconque des revendications 3 à 15, dans laquelle ladite première zone (351) est une zone de l'ouverture numérique égale à 0,3 ou moins, ladite seconde zone (352) est une zone de l'ouverture numérique allant de 0,3 à 0,5.

17. Tête de captage optique selon l'une quelconque des revendications 3 à 16, dans laquelle ladite seconde zone (352) possède une structure de réseaux de diffraction du type en escalier, qui est répétée deux fois, et l'une des structures de réseaux de diffraction du type en escalier est formé sur la zone allant d'environ 1000 μm à environ 1500 μm dans la direction radiale à partir du centre optique de la lentille (35, 36), et l'autre est formée sur la zone allant d'environ 1500 μm à environ 1700 μm.

18. Tête de captage optique selon l'une quelconque des revendications 3 à 17, dans laquelle ladite seconde zone diffracte environ 70 % ou plus de la quantité lumineuse de la seconde lumière arrivant de l'unité de modification du trajet optique, en direction de l'axe optique de l'objectif.

19. Tête de captage optique selon l'une quelconque des revendications 1 à 18, dans laquelle ladite lentille (35, 36) comprend une lentille à faces planes (35) et l'objectif (36).

20. Tête de captage optique selon l'une quelconque des revendications 1 à 18, dans laquelle ladite lentille (35, 36) comprend une lentille à faces planes (35) intégrée à l'objectif (336).

21. Tête de captage optique selon l'une quelconque des revendications 1 à 20, dans laquelle la pluralité de disques optiques inclut au moins les premier et second disques optiques qui sont respectivement un disque versatile numérique (DVD) et un disque compact réinscriptible (CD-RW) et la première lumière est utilisée pour effectuer un enregistrement et une reproduction de l'information en rapport avec ledit premier disque optique (8) et la seconde lumière est utilisée pour effectuer un enregistrement et une reproduction de l'information en rapport avec le second disque optique (90).

22. Tête de captage optique selon l'une quelconque des revendications 2 à 21, dans laquelle ladite unité de modification de trajet optique comprend une lentille de collimation (34) pour collimater les première et seconde lumières arrivant des première et seconde sources optiques, de manière à être alors transférées à la lentille (35, 36).

23. Tête de captage optique selon la revendication 22, dans laquelle ladite unité de modification de trajet optique comprend en outre:

une plaque plane réfléchissante (32) pour transférer la première lumière émise par la première source de lumière à la lentille de collimation (34) et transférer des première et seconde lumières réfléchies par les surfaces d'enregistrement d'informations des disques optiques puis renvoyer par la lentille de collimation au photodétecteur (39); et
un diviseur de faisceau (33) pour transférer la seconde lumière émise par la seconde source optique à la lentille de collimation et transférer les première et seconde lumières réfléchies par les surfaces d'enregistrement d'informations des disques optiques, renvoyées par la lentille de collimation, en direction de la plaque plane réfléchissante (32).

24. Lentille pour recevoir une lumière ayant une longueur d'onde respectivement différente, la lumière (35) comprenant une première zone (351), une seconde zone (352) et une troisième zone (353) ayant des caractéristiques optiques respectivement différentes dans un plan de réception de la lumière, dans laquelle ladite première zone (351) comprend le centre optique du plan de réception de la lumière, ladite seconde zone (352) est située à l'extérieur de ladite première zone (351), et ladite troisième zone (353) est située à l'extérieur de ladite seconde zone (352), **caractérisée en ce que** lesdites première et troisième zones (351, 353) transmettent sensiblement totalement, sans distorsion ni diffraction, les première et seconde lumières possédant des longueurs d'onde respectivement différentes, et ladite seconde zone (352) transmet totalement, sans distorsion ni diffraction, la première lumière et diffracte et fait converger la majeure partie de la seconde lumière en direction de l'axe optique de la lentille (35).

25. Lentille selon la revendication 24, dans laquelle ladite seconde zone (352) est réalisée avec une forme annulaire.

26. Lentille selon la revendication 24 ou 25, dans laquelle ladite seconde zone (352) comprend des rainures de diffraction.

27. Lentille selon la revendication 26, dans laquelle lesdites rainures de diffraction sont formées dans le plan recevant les première et seconde lumières.

28. Lentille selon la revendication 26 ou 27, dans laquelle lesdites rainures de diffraction sont réalisées par attaque chimique en étant peu profondes lorsqu'on s'éloigne du centre optique de ladite lentille.

29. Lentille selon l'une quelconque des revendications 26 à 28, dans laquelle ladite seconde zone (352) inclut un réseau de diffraction ayant une structure du type en escalier dans une direction radiale.

30. Lentille selon l'une quelconque des revendications 26 à 28, dans laquelle lesdites rainures de diffraction possèdent une structure en forme d'escalier ou en dents de scie, qui se répète périodiquement.

31. Lentille selon la revendication 30, dans laquelle lesdites rainures de diffraction possèdent la structure en dents de scie, qui se répète deux fois.

32. Lentille selon la revendication 30, dans laquelle lesdites rainures de diffraction sont configurées sont présentes en un nombre satisfaisant à l'équation suivante dans une structure en forme d'escalier d'un cycle

$$N = \lambda_1/(\lambda_2 - \lambda_1)$$

N désignant le nombre entier de marches de réseaux de diffraction, $\lambda_1$ la longueur d'onde de la première lumière et $\lambda_2$ la longueur d'onde de la seconde lumière.

33. Lentille selon l'une quelconque des revendications 27 à 32, dans laquelle lesdites rainures de diffraction possèdent des coefficients de rendement de transmission satisfaisant à l'équation suivante en rapport avec la seconde lumière incidente à partir de l'unité de modification de trajet

$$T_m = \frac{1}{T} \int_0^T \exp\left(\frac{2\pi i m}{T} X\right) T_j(X) \, dx$$

$T_m$ désignant le coefficient de rendement de transmission du m-ème ordre de diffraction, T la largeur de la structure du réseau de diffraction du type en escalier correspondant à un cycle, m le numéro d'ordre de diffraction, $\pi$ le rapport de la circonférence du cercle à son diamètre, i l'unité imaginaire, X la distance du centre optique de la lentille (35, 36) et $T_j(\chi)$ le coefficient de rendement de transmission pour $\chi$.

34. Lentille selon la revendication 32 ou 33, dans laquelle dans ladite structure de diffraction du type en escalier d'un cycle, chaque rainure de diffraction qui est située à la j-ème position à partir du centre optique de la lentille (35, 36) possède un coefficient de rendement de transmission $T_j(\chi)$ satisfaisant à l'équation suivante

$$T_j(\chi) = \exp\left(\frac{(2j)\pi i(n-n_0)d}{N\lambda}\right)$$

$\lambda$ désignant la longueur d'onde de la lumière incidente, d la profondeur de la rainure de diffraction qui est formée par attaque chimique dans la partie la plus profonde dans un cycle de la structure de la rainure de diffraction du type en escalier, n l'indice de réfraction de la lentille (36, 36), $n_0$ l'indice de réfraction de l'air et N le nombre de marches dans un réseau d'un cycle.

35. Lentille selon la revendication 33 ou 34, dans laquelle lesdites rainures de diffraction génèrent des différences de phase satisfaisant à l'équation suivante:

$$\delta_j = \exp\left(\frac{2\pi i(n-n_0)d_j}{\lambda}\right)$$

$\delta_j$ désignant la différence de phase optique générée par la j-ème différence de.pas par rapport au centre optique de la lentille (35, 36), $\pi$ le rapport de la circonférence d'un cercle à son diamètre, n l'indice de réfraction de la lentille (35, 36), $n_0$ l'indice de réfrac-

tion de l'air et d$_j$ la différence de pas du j-ème réseau de diffraction.

**36.** Lentille selon l'une quelconque des revendications 24 à 35, dans laquelle ladite première zone (351) est une zone de l'ouverture numérique égale à 0,3 ou moins, ladite seconde zone (352) est une zone de l'ouverture numérique allant de 0,3 à 0,5.

**37.** Lentille selon l'une quelconque des revendications 24 à 36, dans laquelle ladite seconde zone possède une structure du type en escalier, qui se répète deux fois, et l'une des structures de réseaux de diffraction du type en escalier est formé sur la zone allant d'environ 1000 µm à environ 1500 µm dans la direction radiale à partir du centre optique de la lentille (35, 36), et l'autre est formée sur la zone allant d'environ 1500 µm à environ 1700 µm.

**38.** Lentille selon l'une quelconque des revendications 24 à 37, dans laquelle ladite seconde zone diffracte environ 70 % ou plus de la quantité lumineuse de la seconde lumière incidence dans la direction de convergence par rapport à l'axe optique.

# FIG. 1(PRIOR ART)

## FIG. 2(PRIOR ART)

REGION 2

REGION 1

REGION 2

NA=0.45

NA=0.6

## FIG. 3

# FIG. 4

35

351

352

353

NA 0.3

NA 0.5

NA0 6

# FIG. 5

# FIG. 6

# FIG. 7

OPTICAL AXIS
OF LENS

$\alpha$T    d/3    3d/3    d    n    $n_0$

$\beta$T

$\gamma$T

T

# FIG. 8

OBJECTIVE LENS    CD−RW

FLAT PLATE LENS    DVD

# FIG. 9

# FIG. 10